# EUROPÄISCHE PATENTSCHRIFT

(11) **EP 3 596 327 B1**
(45) Veröffentlichungstag und Bekanntmachung des Hinweises auf die Patenterteilung: **09.06.2021**
(21) Anmeldenummer: 18712154.6
(22) Anmeldetag: 15.03.2018
(51) Int. Cl.: F02K 9/52, F02K 9/62, F23R 3/00, F23R 3/34

(54) **SCHUBKAMMERVORRICHTUNG UND VERFAHREN ZUM BETREIBEN EINER SCHUBKAMMERVORRICHTUNG**
THRUST CHAMBER DEVICE AND METHOD FOR OPERATING A THRUST CHAMBER DEVICE
DISPOSITIF DE CHAMBRE DE POUSSÉE ET PROCÉDÉ PERMETTANT DE FAIRE FONCTIONNER UN DISPOSITIF DE CHAMBRE DE POUSSÉE

(30) Priorität: 15.03.2017 DE 102017105581; 29.03.2017 DE 102017106758
(43) Veröffentlichungstag der Anmeldung: 22.01.2020
(73) Patentinhaber: Deutsches Zentrum für Luft- und Raumfahrt e.V., 51147 Köln (DE)
(72) Erfinder: ORTELT, Markus, 74223 Flein (DE); HALD, Hermann, 71287 Weissach (DE)
(74) Vertreter: Hoeger, Stellrecht & Partner Patentanwälte mbB
(86) Internationale Anmeldenummer: PCT/EP2018/056517
(87) Internationale Veröffentlichungsnummer: WO 2018/167204

(56) Entgegenhaltungen:
- WO-A1-2007/147522
- DE-A1- 3 734 099
- DE-A1-102011 000 383
- US-A- 2 667 740
- US-A- 3 451 223

## Beschreibung

Die vorliegende Erfindung betrifft eine Schubkammervorrichtung, die in Anspruch 1 definiert wird.

Ferner betrifft die vorliegende Erfindung ein Verfahren zum Betreiben einer Schubkammervorrichtung, das in Anspruch 13 definiert wird.

Des Weiteren betrifft die Erfindung ein Triebwerk, insbesondere für einen Flugkörper oder ein Fluggerät.

Außerdem betrifft die vorliegende Erfindung einen Flugkörper oder ein Fluggerät, umfassend einen ersten Treibstoffspeicher für mindestens eine erste Treibstoffkomponente, einen zweiten Treibstoffspeicher für mindestens eine zweite Treibstoffkomponente und ein Triebwerk.

Schubkammervorrichtungen der eingangs beschriebenen Art werden beispielsweise bei Triebwerken eingesetzt, um einen Schub, beispielsweise zum Antrieb eines Flugkörpers wie einer Rakete, insbesondere durch Verbrennung von Treibstoffkomponenten zu erzeugen. Bei einer Treibstoffkomponente kann es sich insbesondere um einen Brennstoff handeln. Beispielsweise können als Brennstoff flüssiger Wasserstoff (LH₂) und als weitere Treibstoffkomponente flüssiger Sauerstoff (LOX), der die Funktion des Oxidators übernimmt, eingesetzt werden.

Ein Problem bei aktuell verfügbaren Hochleistungs-Raketenantrieben sind insbesondere die hohen Druckverluste, die durch die Kühlung der äußeren Düsenwandung entstehen. Bekannt sind hier insbesondere Regenerativkühlungen, Filmkühlungen und Transpirationskühlungen.

Die Filmkühlung kann insbesondere zum thermischen Schutz gänzlich oder auch nur ergänzend zur regenerativen Wandkühlung von klassischen, aus metallischen Werkstoffen ausgebildeten Schubkammern innerhalb des Schubraums verwendet werden. Allerdings führt diese Form der Kühlung zu Verlusten der nutzbaren Verbrennungsenthalpie, welche die Triebwerkseffizienz wiederum reduzieren.

Mit einer transpirationsgekühlten äußeren Düsenwandung kann zwar eine ähnlich gute Effizienz wie bei Hochleistungs-Gasgenerator-Triebwerken erreicht werden, allerdings führt eine solche Transpirationskühlung wie die Filmkühlung zu überhöhten Massenströmen unverbrannten Treibstoffs. Des Weiteren ist ein Transpirationskühlung systembedingt nicht für den Expander-Zyklus geeignet, bei dem Turbinen zur Treibstoffförderung durch eine im Kühlsystem des Triebwerkes erhitzte Treibstoffkomponente angetrieben werden.

Zur Effizienzsteigerung einer Schubkammer mit Transpirationskühlung würde daher, wenn überhaupt, nur ein System eingesetzt werden, bei dem ein kleiner Teil Heißgas aus der Schubkammer abgezweigt wird, um Turbinen der zur Treibstoffförderung eingesetzten Turbopumpen im sogenannten "Tap-Off-Cycle" anzutreiben.

Ein Problem ist daher bei allen beschriebenen Verfahren entweder ein signifikanter Druckverlust oder ein überhöhter Verlust an Verbrennungsenthalpie an nicht reagiertem Treibstoff.

Aus der DE 37 34 099 A1 sind ein Flugzeug und ein Verfahren zum Lagern von Brennstoffen in einem Flugzeug bekannt. In der US 3,451,223 sind eine Raketentriebwerkskammerkühl- und Einspritzsystem beschrieben. Mittel zum Beschicken und Kühlen von Verbrennungskammern vom Raketentyp sind in der US 2,667,740 offenbart. Die WO 2007/147522 A1 befasst sich mit einem Einblaskopf, einem Mischungsraum und einem Triebwerk. Eine Triebvorrichtung und Verfahren zum Betreiben einer Triebwerkvorrichtung sind aus der DE 10 2011 000 383 A1 bekannt.

Es ist daher eine Aufgabe der vorliegenden Erfindung, eine Schubkammervorrichtung, ein Verfahren, ein Triebwerk und einen Flugkörper beziehungsweise ein Fluggerät der eingangs beschriebenen Art so zu verbessern, dass eine Effizienz der Schubkammervorrichtung verbessert wird.

Diese Aufgabe wird bei einer Schubkammervorrichtung der eingangs beschriebenen Art erfindungsgemäß dadurch gelöst, dass die äußere Düsenwandung mindestens einen Teil der Mehrzahl erster Treibstoffeinlässe umfasst, dass der erste Abschnitt des Schubraums auf einer vom zweiten Abschnitt weg weisenden Seite von einer Injektionswandung begrenzt ist, welche die innere Düsenwandung und die äußere Düsenwandung miteinander verbindet, dass mindestens ein Teil der Mehrzahl zweiter Treibstoffeinlässe in der Injektionswandung angeordnet oder ausgebildet ist und dass die Mehrzahl zweiter Treibstoffeinlässe ausschließlich in der Injektionswandung angeordnet oder ausgebildet ist.

Die vorgeschlagene Weiterbildung einer bekannten Schubkammervorrichtung hat insbesondere den Vorteil, dass die durch die Mehrzahl erster Treibstoffeinlässe in die Schubkammer geleitete erste Treibstoffkomponente vollständig in den Schubraum gelangen kann. Beim Durchströmen der äußeren Düsenwandung wird diese gekühlt. Einen Massenstromverlust der ersten Treibstoffkomponente gibt es daher nicht. Die ersten Treibstoffeinlässe sind insbesondere derart ausgebildet, dass mehr Treibstoff in den Schubraum injiziert werden kann, als für die Kühlung der äußeren Düsenwandung erforderlich ist. Dies ermöglicht es insbesondere, die gesamte Menge der ersten Treibstoffkomponente durch diese ersten Treibstoffeinlässe in den Schubraum einzuleiten. So wird insbesondere ermöglicht, die ersten und zweiten Treibstoffeinlässe räumlich derart voneinander zu trennen, dass die einen in der äußeren Düsenwandung angeordnet sind, die zweiten Treibstoffeinlässe in einer anderen, den Schubraum begrenzenden Wandung der Schubkammer. Diese Ausgestaltung ist insbesondere auch dann möglich, wenn die Schubkammervorrichtung keine innere Düsenwandung aufweist und wenn der erste Abschnitt und der zweite Abschnitt einen gemeinsamen Abschnitt des Schubraums bilden. Durch diese vorgeschlagene Form der Injektion der ersten Treibstoffkomponente, bei der es sich beispielsweise um den Brennstoff handeln kann, insbesondere flüssigen Wasserstoff, flüssiges Methan (CH₄) oder auch flüssiges Erdgas (LNG), lässt sich zum einen die äußere Düsenwandung optimal kühlen und zum anderen die erste Treibstoffkomponente gezielt in beliebige Bereiche des ersten und/ oder zweiten Abschnitts des Schubraums injizieren, so dass eine optimale Vermischung zwischen der ersten und der zweiten Treibstoffkomponente in diesen beiden Abschnitten erreicht werden kann. Dadurch kann eine Verbrennungseffizienz erhöht werden. Zudem lassen sich insbesondere auch Anforderungen an das Material zur Ausbildung der äußeren Düsenwandung beliebig herabsetzen, da während des gesamten Betriebs der Schubkammervorrichtung eine Kühlung der äußeren Düsenwandung erfolgen kann, die eine bessere Kühlung ermöglicht, als überhaupt erforderlich ist. Zudem lässt sich auch ein Risiko für eine Beschädigung der Schubkammerwandung minimieren, da diese praktisch stets annähernd auf derselben tiefen Temperatur gehalten werden kann. Optional können die innere oder äußere Düsenwandung auch weitere Treibstoffeinlässe aufweisen, insbesondere zweite Treibstoffeinlässe für die zweite Treibstoffkomponente oder Treibstoffeinlässe für eine dritte oder weitere Treibstoffkomponente. Der erste Abschnitt des Schubraums ist auf einer vom zweiten Abschnitt weg weisenden Seite von einer Injektionswandung begrenzt, welche die innere Düsenwandung und die äußere Düsenwandung miteinander verbindet, und mindestens ein Teil der Mehrzahl zweiter Treibstoffeinlässe ist in der Injektionswandung angeordnet oder ausgebildet. Diese Ausgestaltung ermöglicht es insbesondere, die zweite Treibstoffkomponente mindestens teilweise, insbesondere vollständig durch die Injektionswandung in den Schubraum zu injizieren. Insbesondere ist es so möglich, die Treibstoffkomponenten in Injektionsrichtungen quer zueinander in den Schubraum einzubringen, wodurch eine gute Vermischung und damit auch eine hohe Verbrennungsstabilität erreicht werden können. Die Konstruktion der Schubkammervorrichtung wird weiter vereinfacht, da die Mehrzahl zweiter Treibstoffeinlässe ausschließlich in der Injektionswandung angeordnet oder ausgebildet ist. So lassen sich insbesondere die erste Treibstoffkomponente ausschließlich durch die innere und die äußere Düsenwandung in den Schubraum injizieren, die zweite Treibstoffkomponente ausschließlich durch die Injektionswandung.

Vorteilhaft ist es, wenn die äußere Düsenwandung mindestens teilweise fluiddurchlässig ausgebildet ist zum Ausbilden mindestens eines Teils der Mehrzahl erster Treibstoffeinlässe. Optional oder alternativ können die ersten Treibstoffeinlässe auch in Form von Düsen oder Kanälen der äußeren Düsenwandung ausgebildet werden.

Besonders kompakt ausbilden lässt sich die Schubkammervorrichtung, wenn die äußere Düsenwandung porös ausgebildet ist zum Ausbilden mindestens eines Teils der Mehrzahl erster Treibstoffeinlässe. Eine poröse äußere Düsenwandung ermöglicht es insbesondere, die erste Treibstoffkomponente durch Poren in der äußeren Düsenwandung in den Schubraum zu injizieren oder einzuleiten. Hier können insbesondere Materialen für die äußere Düsenwandung eingesetzt werden, die eine hierfür erforderliche Porosität aufweisen. Vorzugsweise ist dies größer als 8%, insbesondere deutlich größer. Eine solche Porosität wird insbesondere eingesetzt, um die äußere Düsenwandung durch Transpirationskühlung vor Überhitzung zu schützen.

Günstigerweise beträgt eine Porosität der äußeren Düsenwandung mindestens teilweise mindestens etwa 10%. Vorzugsweise beträgt sie teilweise mindestens etwa 15%. Weiter vorzugsweise beträgt sie mindestens teilweise mindestens etwa 20%. Mindestens teilweise bedeutet insbesondere, dass die Porosität in Bereichen, in denen eine Kühlung der äußeren Düsenwandung gewünscht wird, in einem Bereich liegt, der für eine Transpirationskühlung ausreichend ist, also etwa 8%. Um jedoch die erste Treibstoffkomponente in einer Menge im Schubraum zu injizieren, damit dort die gewünschte Verbrennung stattfinden kann, sollte eine Porosität vorzugsweise insbesondere größer als mindestens etwa 10% sein. Je größer die Porosität, umso größer die Menge der ersten Treibstoffkomponente, die in den Schubraum eingeleitet werden kann. Die Porosität wird hierbei insbesondere bevorzugt derart eingestellt, dass eine optimale Relation zwischen Massenstrom und Versorgungsdruck entsteht, wobei der optimale Versorgungsdruck dann erreicht ist, wenn der Druckabfall über die poröse Düsenwandung hinweg gerade mindestens so groß ist, dass die Düsenwandung gegen kritische Druckstöße aufgrund von Verbrennungsinstabilitäten geschützt ist. Ferner soll nochmals klargestellt werden, dass die gesamte Menge der ersten Treibstoffkomponente zu Verbrennungszwecken genutzt werden kann, auch wenn diese vordem Eintritt in den Schubraum bereits die äußere Düsenwandung gekühlt hat. Bereiche der äußeren Düsenwandung, die die genannten Mindestporositäten aufweisen, können sich über alle genannten Abschnitte des Schubraums oder aber über Teile desselben oder derselben erstrecken, insbesondere kann es sich dabei um den Schubraum ringförmig umgebende Bereiche der äußeren Düsenwandung handeln.

Vorteilhaft ist es, wenn sich eine Porosität der äußeren Düsenwandung in Abhängigkeit eines Abstands von einem ersten Ende des ersten Abschnitts ändert. Dies ermöglicht es insbesondere, in bestimmten Bereichen des Schubraums gezielt eine größere Menge der ersten Treibstoffkomponente zu injizieren als in anderen Bereichen. Nahe der engsten Stelle ist nicht zwingend ein Überschuss der ersten Treibstoffkomponente für Verbrennungszwecke erforderlich. Dagegen ist insbesondere im ersten Abschnitt eine entsprechend ausreichende Menge für die Verbrennung der ersten Treibstoffkomponente im Ringbrennraum gewünscht. Eine Porosität der äußeren Düsenwandung kann beispielsweise auch mehrfach zu- und auch wieder abnehmen. So lassen sich Bereiche der Düsenwandung ausbilden, beispielsweise Mischbereiche oder Treibstoffmischbereiche, in die eine größere Menge oder eine kleinere Menge der ersten Treibstoffkomponente in den Schubraum injiziert werden kann.

Vorteilhaft ist es, wenn die Porosität ausgehend vom ersten Ende des ersten Abschnitts in Richtung auf die engste Stelle hin abnimmt. Insbesondere kann die Porosität kontinuierlich abnehmen. Insbesondere kann die Porosität proportional zu einer Querschnittsfläche des Schubraums ausgehend vom ersten Ende des ersten Abschnitts vorgesehen sein. So kann in Bereichen mit größerem Querschnitt auch mehr von der ersten Treibstoffkomponente in den Schubraum eingebracht werden.

Ferner ist es vorteilhaft, wenn die innere Düsenwandung mindestens einen Teil der Mehrzahl erster Treibstoffeinlässe umfasst. Dies ermöglicht es auf einfache Weise, auch die innere Düsenwandung durch die erste Treibstoffkomponente beim Injizieren derselben in den Schubraum hinreichend zu kühlen. Zudem ist es möglich, durch die innere Düsenwandung ebenfalls einen Teil der ersten Treibstoffkomponente zu Verbrennungszwecken in den Schubraum zu injizieren. So kann insbesondere eine verbesserte Verbrennungsstabilität im Ringraum des ersten Abschnitts des Schubraums erreicht werden. Ferner lässt sich so auch eine Konstruktion des herkömmlichen Injektors im Bereich einer stirnseitigen Endfläche des Schubraums zum Ende des ersten Abschnitts hin vereinfachen, wenn die ersten Treibstoffeinlässe derart ausgelegt sind, dass sie die Injektion der gesamten ersten Treibstoffkomponente durch die innere Düsenwandung und die äußere Düsenwandung ermöglichen. So können komplexe Koaxialinjektoren, mit denen die beiden Treibstoffkomponenten in herkömmlichen Triebwerken koaxial zueinander, also einmal durch eine Düse sowie durch eine diese konzentrisch umgebende Ringdüse injiziert werden, vermieden werden. So lassen sich die innere Düsenwandung und die äußere Düsenwandung als Injektor für die gesamte zu injizierende Menge der ersten Treibstoffkomponente ausbilden. Bei effizienter, also mit maximiertem spezifischem Impuls Iₛₚ optimierter Verbrennung, also mit Brennstoffüberschuss, können die innere Düsenwandung und die äußere Düsenwandung zum Injektor werden, so dass keine zusätzlichen Druckverluste zur Wandkühlung erzeugt werden. Durch die Ausgestaltung der Ringbrennkammer im ersten Abschnitt wird ferner eine verbesserte Verbrennungsstabilität erreicht. Ein die innere Düsenwandung bildender Brennkammerkern, auch als Einschubkörper bezeichnet, kann zudem bestimmte Resonanzmoden im Schubraum dämpfen oder sogar vollständig eliminieren. Wie auch bereits oben für die äußere Düsenwandung beschrieben, kann die innere Düsenwandung aus praktisch einem beliebigen Material, insbesondere auch aus einem metallischen Werkstoff gebildet werden, da durch eine ausreichend hohe, in den Schubraum injizierte Menge der ersten Treibstoffkomponente durch die innere Düsenwandung quasi eine Überkühlung der inneren Düsenwandung erreicht werden kann, um eine Überhitzung derselben sicher zu vermeiden. Die Wahl des Materials zur Ausbildung der inneren und/oder äußeren Düsenwandung ist praktisch völlig unkritisch, da eine deutlich bessere Kühlung durch eine satte Durchströmung der Düsenwandung erreicht werden kann. Eine satte Durchströmung in diesem Sinne bedeutet, dass mehr, also eine größere Menge, der ersten Treibstoffkomponente durch die innere und/oder äußere Düsenwandung geleitet wird als zur Transpirationskühlung derselben erforderlich ist.

Die erste Treibstoffkomponente lässt sich durch die innere Düsenwandung auf einfache Weise in den Schubraum injizieren, wenn die innere Düsenwandung mindestens teilweise fluiddurchlässig ausgebildet ist zum Ausbilden mindestens eines Teils der Mehrzahl erster Treibstoffeinlässe. Beispielsweise kann die Fluiddurchlässigkeit erreicht werden durch Ausbildung von Fluidkanälen zum Injizieren der ersten Treibstoffkomponente, welche Fluidkanäle in den Schubraum münden.

Günstigerweise ist die die innere Düsenwandung porös ausgebildet ist zum Ausbilden mindestens eines Teils der Mehrzahl erster Treibstoffeinlässe. Beispielsweise lässt sich so die Menge des zu injizierenden Treibstoffs durch die Porosität mindestens teilweise vorgeben. Ferner lassen sich Materialien zum Ausbilden der inneren Düsenwandung einsetzen, die inhärent porös sind. Beispielsweise kommen hier Keramiken in Betracht. Auch Fasergewebe oder faserverstärkte Werkstoffe können zur Ausbildung der inneren und/oder äußeren Düsenwandung eingesetzt werden.

Um nicht nur eine Kühlung der inneren Düsenwandung sicherstellen zu können, sondern auch einen hinreichend großen Treibstoffstrom in den Schubraum hinein, ist es günstig, wenn eine Porosität der inneren Düsenwandung mindestens etwa 10% beträgt. Vorzugsweise beträgt die Porosität mindestens etwa 15%. Weiter vorzugsweise beträgt sie mindestens teilweise mindestens etwa 20%. In jedem Fall ist die Porosität so gewählt, dass sie größer ist als für eine reine Transpirationskühlung erforderlich.

Vorzugsweise ändert sich eine Porosität der inneren Düsenwandung in Abhängigkeit eines Abstands von einem ersten Ende des ersten Abschnitts. Beispielsweise kann die Porosität ein- oder mehrfach zu- und dann wieder abnehmen. So können lokale Maxima und Minima der Porosität sowohl in der inneren Düsenwandung als auch bei der äußeren Düsenwandung erreicht werden.

Gemäß einer weiteren bevorzugten Ausführungsform der Erfindung kann vorgesehen sein, dass die Porosität ausgehend vom ersten Ende des ersten Abschnitts in Richtung auf den zweiten Abschnitt hin abnimmt. Auf diese Weise kann erreicht werden, dass nahe des vom zweiten Abschnitt weg weisenden ersten Endes des ersten Abschnitts deutlich mehr von der ersten Treibstoffkomponente in den Schubraum injiziert werden kann als im Bereich eines Endes der inneren Düsenwandung im Übergang zwischen dem ersten und zweiten Abschnitt.

Günstig ist es, wenn alle ersten Treibstoffeinlässe in der äußeren Düsenwandung und der inneren Düsenwandung angeordnet oder ausgebildet sind. Dies ermöglicht es insbesondere, die erste Treibstoffkomponente vollständig durch die innere und die äußere Düsenwandung in den Schubraum einzubringen. Wie bereits oben angedeutet, kann so auf komplex ausgebildete Koaxialinjektoren, wie sie herkömmlich eingesetzt werden, vollständig verzichtet werden. Es wird lediglich ein Injektor für eine zweite Treibstoffkomponente benötigt, der vorzugsweise sehr einfach im ALM-Verfahren ("Additive Layer Manufacturing") hergestellt werden kann. Eine Trennung von unterschiedlichen Injektionskanälen für zwei oder mehr Treibstoffkomponenten im Injektor sind dann nicht erforderlich. Ferner ist es möglich, die Treibstoffkomponenten mit Einspritzrichtungen quer zueinander in den Schubraum zu injizieren. Dies ermöglicht eine verbesserte Durchmischung der Treibstoffkomponenten im Schubraum. Ferner kann so insbesondere auch eine hohe Verbrennungseffizienz und eine gute Verbrennungsstabilität erreicht werden.

Ein besonders einfacher Aufbau der Schubkammervorrichtung kann insbesondere erreicht werden, wenn die innere Düsenwandung und die äußere Düsenwandung ausschließlich erste Treibstoffeinlässe aufweisen. Auf diese Weise lässt sich ausschließlich diese Treibstoffkomponente durch die innere Düsenwandung und die äußere Düsenwandung in den Schubraum injizieren.

Vorteilhaft ist es, wenn die innere Düsenwandung und/oder die äußere Düsenwandung aus einem keramischen und/oder metallischen Werkstoff ausgebildet sind. Insbesondere keramische oder faserkeramische Werkstoffe lassen sich mit gewünschten Porositäten ausbilden. In metallischen Düsenwandungen können insbesondere Injektionskanäle in definierter Weise eingebracht werden. Es ist optional auch möglich, metallische Werkstoffe und keramische Werkstoffe bei der Ausbildung der Düsenwandungen zu kombinieren, um insbesondere Bereiche mit definierten Eintrittskanälen und Bereiche mit definierten Porositäten auszubilden.

Günstig ist es, wenn die innere Düsenwandung eine Mehrzahl innerer Kühlmitteleinlässe und/oder wenn die äußere Düsenwandung eine Mehrzahl äußerer Kühlmitteleinlässe für ein Kühlmittel zum Kühlen der inneren Düsenwandung und/oder der äußeren Düsenwandung aufweisen. Diese Ausgestaltung ermöglicht es insbesondere auf einfache Weise eine Kühlung der Düsenwandungen, beispielsweise durch Transpirationskühlung. Die zum Verdampfen eines flüssigen Kühlmittels erforderliche Wärme wird dabei der inneren und/oder äußeren Düsenwand beim Durchströmen derselben entzogen, falls die Schubkammer nicht im über-kritischen Zustand des Mediums betrieben wird.

Ein besonders einfacher und kompakter Aufbau der Schubkammervorrichtung kann insbesondere dadurch erreicht werden, dass die Mehrzahl erster Treibstoffeinlässe die Mehrzahl innerer Kühlmitteleinlässe und/oder die Mehrzahl äußerer Kühlmitteleinlässe bildet. Mit anderen Worten können also die ersten Treibstoffeinlässe wie bereits weiter oben dargelegt nicht nur zum Injizieren der ersten Treibstoffkomponente genutzt werden, sondern auch zum Kühlen der inneren und äußeren Düsenwandungen. Dies kann wie erwähnt insbesondere ohne überhöhten Enthalpie-Verlust und Druckverluste erreicht werden.

Auf einfache Weise lässt sich die Schubkammervorrichtung ausbilden, wenn die Injektionswandung ringförmig ausgebildet ist zum Verschließen der ringförmigen Ringbrennkammer. Insbesondere kann mit der Injektionswandung in dieser Form eine ringförmige Öffnung der Schubkammer zum Begrenzen des Schubraums am ersten Ende des ersten Abschnitts desselben auf einfache Weise verschlossen werden.

Die Injektionswandung kann optional weitere Treibstoffeinlässe für eine dritte Treibstoffkomponente aufweisen. Günstig ist es, wenn die Injektionswandung ausschließlich zweite Treibstoffeinlässe umfasst. So lässt sich eine Systemvereinfachung erreichen, wenn nur erste und zweite Treibstoffeinlässe vorgesehen sind.

Um eine gezielte Injektion der zweiten Treibstoffkomponente in den Schubraum zu erreichen, ist es günstig, wenn die Mehrzahl zweiter Treibstoffeinlässe in Form von Kanälen ausgebildet sind, welche in den Ringbrennraum weisende Kanalmündungen aufweisen. Beispielsweise können diese orientiert und ausgerichtet sein, wie in der DE 10 2013 105 342 A1 beschrieben. Insbesondere können die zweiten Treibstoffeinlässe derart angeordnet und ausgebildet sein, dass die zweite Treibstoffkomponente in den Ringbrennraum hinein einen Spraykegel oder ein Hyperboloid bildet. Im letzteren Fall können die zweiten Treibstoffeinlässe beispielsweise in Form von Kanälen ausgebildet sein, die windschief bezogen auf die Längsachse der Schubkammer verlaufend angeordnet und/oder ausgebildet sind. Die Injektionsstrahlen können insbesondere auch parallel zu den Flächentangenten in Brennkammerachs-Schnitten verlaufen, also in Ebenen parallel zur Brennkammerachse und somit nicht unbedingt entlang der erzeugenden Geraden des Hyperboloids.

Um eine effiziente Kühlung und Führung der Verbrennungsprodukte im Schubraum zu erreichen, ist es vorteilhaft, wenn die innere Schubraumfläche in Richtung auf die äußere Schubraumfläche hin weisend konvex gekrümmt oder im Wesentlichen konvex gekrümmt ist. Im Wesentlichen konvex gekrümmt bedeutet insbesondere, dass eine Einhüllende der inneren Schubraumfläche konvex gekrümmt ist. Die innere Schubraumfläche kann dann auch kurze Bereiche mit konkaver Krümmung aufweisen, beispielsweise um eine Querschnittsfläche des Ringbrennraums zu verändern, insbesondere zu vergrößern, um Treibstoffmischbereiche zu bilden.

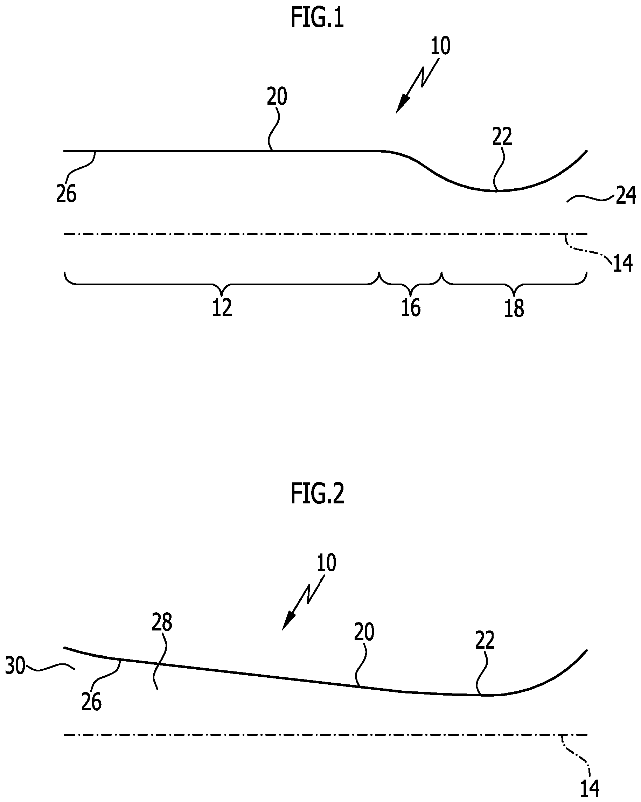

Vorteilhaft ist es, wenn die äußere Schubraumfläche in Richtung auf die innere Schubraumfläche hin weisend konvex gekrümmt ist oder im Wesentlichen konvex gekrümmt ausgebildet ist. Im Vergleich zu einer klassischen Kontur einer äußeren Düsenwandung einer Schubkammer wie sie beispielhaft in Figur 1 dargestellt ist, lassen sich so typische Grenzschichtturbulenzen vermeiden, die auch als Görtler-Wirbel bezeichnet werden. Derartige Wirbel bilden sich insbesondere im Bereich der engsten Stelle, die durch die äußere Düsenwandung definiert wird, aus.

Gemäß einer weiteren bevorzugten Ausführungsform der Erfindung kann vorgesehen sein, dass die Schubkammer eine Längsachse definiert und dass die Schubkammer, insbesondere der erste Abschnitt und/oder der zweite Abschnitt und/oder der dritte Abschnitt, rotationssymmetrisch bezogen auf die Längsachse ausgebildet sind. Dies vereinfacht insbesondere den Aufbau und die Konstruktion der Schubkammervorrichtung.

Ferner ist es vorteilhaft, wenn die äußere Schubraumfläche und/oder die innere Schubraumfläche rotationssymmetrisch bezogen auf die Längsachse ausgebildet sind. Dies vereinfacht insbesondere eine Konstruktion der Schubkammervorrichtung.

Besonders optimale homogene Viskositätsprofile nahe der inneren und äußeren Düsenwandungen können insbesondere erreicht werden, wenn die innere Schubraumfläche und/oder die äußere Schubraumfläche mindestens teilweise die Form eines Rotationshyperboloids aufweisen. Insbesondere können sie Abschnitte von unterschiedlich gekrümmten Rotationshyperboloiden aufweisen. Ferner wird so insbesondere auf einfache Weise ermöglicht, einen konstanten Querschnitt des Ringbrennraums vorzugeben.

Vorzugsweise weist der Ringbrennraum eine konstante oder im Wesentlichen konstante Querschnittsfläche auf. Zwar können sich die inneren und äußeren Schubraumflächen ändern, doch lässt sich auf diese Weise ein quasi-zylindrischer Ringbrennraum ausbilden, der danach ohne Änderung der Krümmungsrichtung, was sich durch das geometrische Zusammenwirken von rein konvexer äußerer und rein konvexer innerer Schubraumfläche automatisch ergibt, in einen konvergenten Schubkammerabschnitt zum Zweck des Schalldurchgangs übergeht. Durch die sich verjüngende äußere Düsenwandung kann so auch ein Bedarf an Kühlmittel, also insbesondere an der ersten Treibstoffkomponente, mit abnehmender, von der äußeren Düsenwandung definierter freier Querschnittsfläche des Schubraums verringert werden.

Ferner kann es vorteilhaft sein, wenn sich eine Querschnittsfläche des Ringbrennraums in Abhängigkeit eines Abstands von einem ersten Ende des Ringbrennraums ändert zur Ausbildung mindestens eines Treibstoffmischbereichs im Ringbrennraum. Insbesondere können zwei, drei, vier oder mehr derartige Treibstoffmischbereiche im Ringbrennraum ausgebildet werden. Eine solche Querschnittsänderung kann insbesondere erreicht werden, wenn sich die inneren oder äußeren Schubraumflächen nicht krümmen oder zu einer bevorzugten konvexen Krümmung entgegengesetzt über einen sich in Richtung der Längsachse erstreckenden Bereich konkav gekrümmt sind.

Vorteilhaft ist es, wenn Schubkammervorrichtung eine erste Injektionseinrichtung zum Injizieren der mindestens einen ersten Treibstoffkomponente in den Schubraum in einer Richtung quer zur inneren Schubraumfläche und/oder zur äußeren Schubraumfläche aufweist. Insbesondere kann die Injektionseinrichtung ausgebildet sein zum Injizieren der mindestens einen ersten Treibstoffkomponente senkrecht zur inneren und/oder äußeren Schubraumfläche in den Schubraum hinein. Diese Art der Ausbildung der ersten Injektionseinrichtung hat insbesondere den Vorteil, dass eine zweite Treibstoffkomponente quer, insbesondere senkrecht, zur ersten Treibstoffkomponente in den Schubraum injiziert oder eingespritzt werden kann.

Um die erste Treibstoffkomponente mit hinreichend hohem Druck in den Schubraum einspritzen zu können, ist es günstig, wenn die erste Injektionseinrichtung eine erste Pumpeinrichtung zum Pumpen der mindestens einen ersten Treibstoffkomponente aus einem ersten Treibstoffspeicher durch die Mehrzahl erster Treibstoffeinlässe in den Schubraum umfasst.

Ferner ist es günstig, wenn eine zweite Injektionseinrichtung vorgesehen ist zum Injizieren der mindestens einen zweiten Treibstoffkomponente in den ersten Abschnitt in einer Richtung parallel oder im Wesentlichen parallel zu Tangenten an die innere Schubraumfläche und/oder die äußere Schubraumfläche umfasst. So können die Treibstoffkomponenten insbesondere quer, vorzugsweise senkrecht zueinander in den Schubraum eingespritzt werden.

Auf einfache Weise lässt sich die zweite Treibstoffkomponente in den Schubraum einspritzen, wenn die zweite Injektionseinrichtung eine zweite Pumpeinrichtung zum Pumpen der mindestens einen zweiten Treibstoffkomponente aus einem zweiten Treibstoffspeicher durch die Mehrzahl zweiter Treibstoffeinlässe in den ersten Abschnitt umfasst. Sowohl die erste als auch die zweite Pumpeinrichtung können insbesondere in Form von Turbopumpen ausgebildet sein mit einer Antriebsturbine und einem insbesondere auf derselben Welle angeordneten Pumpenrad. Die Turbinen der Turbopumpen können insbesondere durch aus dem Schubraum entnommene Verbrennungsgase angetrieben werden oder durch Reaktion eines Teils der Treibstoffkomponenten in einer Vorbrennkammer und Zuführen der Verbrennungsgase zur Turbine. Auf diese Weise lässt sich insbesondere ein Gasgeneratortriebwerk ausbilden. Wird alternativ die Turbine einer Pumpeinrichtung durch das Abgas aus einer Vorbrennkammer angetrieben, in die eine Treibstoffkomponente mit einem großen Überschuss injiziert wird, kann ein sogenanntes Vorverbrennungskammer-Triebwerk ausgebildet werden. Das Abgas mit der nicht bei der Verbrennung reagierten Treibstoffkomponente kann dann in den Schubraum durch die ersten oder zweiten Treibstoffeinlässe injiziert werden. Beispielsweise kann ein kleiner Teil der ersten Treibstoffkomponente in der Vorbrennkammer mit der zweiten Treibstoffkomponente zusammen gebracht werden, wobei nur ein kleiner Teil der ersten Treibstoffkomponente reagiert. Beim Einsatz von Turbopumpen als Pumpeinrichtungen kann insbesondere eine Turbine zum Antreiben von zwei Pumpenrädern genutzt werden, mit welchem einerseits die erste Treibstoffkomponente und andererseits die zweite Treibstoffkomponente gefördert werden können. Als Treibstoffkomponenten werden vorzugsweise flüssige Treibstoffkomponenten eingesetzt wie flüssiger Sauerstoff, flüssiger Wasserstoff, flüssiges Methan oder dergleichen.

Die eingangs gestellte Aufgabe wird ferner bei einem Triebwerk der eingangs beschriebenen Art erfindungsgemäß dadurch gelöst, dass es eine der oben beschriebenen Schubkammervorrichtungen umfasst.

Ein derart weitergebildetes Triebwerk weist dann die bereits oben im Zusammenhang mit bevorzugten Ausführungsformen beschriebenen Vorteile auf.

Die eingangs genannte Aufgabe wird ferner bei einem Flugkörper oder einem Fluggerät der eingangs beschriebenen Art erfindungsgemäß dadurch gelöst, dass sie ein erfindungsgemäßes Triebwerk umfassen. Durch die verbesserte Kühlung der Düsenwandungen der Schubkammervorrichtung und die beschriebenen geringeren Verluste lassen sich mit der gleichen Treibstoffmenge größere Nutzlasten aufgrund des höheren spezifischen Impulses I_{SP} bewegen.

Die eingangs gestellte Aufgabe wird ferner bei einem Verfahren der eingangs beschriebenen Art erfindungsgemäß dadurch gelöst, dass mindestens durch einen Teil der Mehrzahl erster Treibstoffeinlässe eine größere Menge der ersten Treibstoffkomponente in den Schubraum injiziert wird als zur Kühlung der inneren Düsenwandung und/oder der äußeren Düsenwandung erforderlich ist.

Wie bereits oben beschrieben kann so eine übersatte Kühlung der Düsenwandungen erreicht werden, so dass eine Überhitzung derselben praktisch nicht mehr möglich ist. Ferner lassen sich Massenstrom- und Druckverluste verringern, wodurch sich der spezifische Impuls Iₛₚ einer Schubkammervorrichtung verbessern lässt.

Günstig ist es, wenn mindestens eine mehr als doppelt so große Menge der ersten Treibstoffkomponente durch die Mehrzahl erster Treibstoffeinlässe injiziert wird als zur Kühlung der inneren Düsenwandung und/oder der äußeren Düsenwandung erforderlich ist. Vorzugsweise wird mehr als dreimal so viel von der ersten Treibstoffkomponente durch die Mehrzahl erster Treibstoffeinlässe injiziert.

Der Aufbau einer Schubkammervorrichtung lässt sich auf einfache Weise dadurch vereinfachen, wenn die gesamte erste Treibstoffkomponente durch die Mehrzahl erster Treibstoffeinlässe in den Schubraum injiziert wird. Insbesondere kann so wie oben beschrieben eine zweite Injektionseinrichtung ausgebildet werden, welche zweite Treibstoffeinlässe umfasst, die weder in der inneren Düsenwandung noch in der äußeren Düsenwandung angeordnet oder ausgebildet sind.

Die nachfolgende Beschreibung bevorzugter Ausführungsformen der Erfindung dient im Zusammenhang mit den Zeichnungen der näheren Erläuterung. Es zeigen:
- Figur 1:: eine schematische Darstellung einer klassischen Kontur eines Schubraumdesigns;
- Figur 2:: eine schematische Darstellung einer durch ein einfaches Hyperboloid definierten Schubkammerkontur;
- Figur 3:: eine schematische Darstellung einer Schubraumkontur mit zwei Hyperboloiden zur Definition der inneren und äußeren Düsenwandungen;
- Figur 4:: eine schematische Darstellung eines erfindungsgemäßen Schubraumdesigns mit innerer und äußerer Düsenwandung;
- Figur 5:: eine schematische Darstellung eines Teils einer Schubkammervorrichtung mit in einen Schubraum einströmender erster Treibstoffkomponente;
- Figur 6:: eine schematische Darstellung eines Teils eines Gasgeneratortriebwerks;
- Figur 7:: eine schematische Darstellung eines Teils eines Triebwerks mit Vorbrennkammer zum Betreiben im Vorbrenn-Zyklus;
- Figur 8:: eine beispielhafte Darstellung eines berechneten homogenen wandnahen Viskositätsprofils aus einer Heiß-Gas-Simulation;
- Figur 9:: eine schematische Darstellung eines Temperaturprofils im Schubraum bei vollständig getrennter Injektion der Treibstoffkomponenten einerseits durch die Injektionswand und andererseits durch die innere und äußere Düsenwandung;
- Figur 10:: eine schematische vergrößerte Darstellung eines Ausschnitts des Ringbrennraums;
- Figur 11:: eine schematische Darstellung eines Teils einer Schnittansicht längs Linie 11-11 in Figur 10 durch den Ringbrennraum;
- Figur 12: eine schematische Darstellung eines Ausschnitts des Ringbrennraums eines weiteren Ausführungsbeispiels einer Schubkammer; und
- Figur 13: eine schematische Darstellung eines Ausschnitts des Ringbrennraums eines weiteren Ausführungsbeispiels einer Schubkammer.

In Figur 1 ist schematisch ein Teil einer Schubkammer 10 dargestellt, wie sie aus dem Stand der Technik bekannt ist. Sie umfasst einen sich koaxial zu einer Längsachse 14 erstreckenden zylindrischen ersten Abschnitt 12, einen sich daran anschließenden, in Richtung auf die Längsachse 14 konkav gekrümmten zweiten Abschnitt 16 und sich einen daran anschließenden dritten Abschnitt 18, welcher in Richtung auf die Längsachse 14 hin weisend konvex gekrümmt ist.

Im Bereich des dritten Abschnitts 18 definiert eine die Schubkammer 10 begrenzende Wandung 20 eine engste Stelle 22, durch die Verbrennungsgase zum Düsenaustritt hin divergent beschleunigt werden. Der dritte Abschnitt ausgehend von der Stelle 22 wird auch als Überschallbereich bezeichnet.

Insbesondere im Bereich des zweiten Abschnitts 16 können sich Grenzschutzturbulenzen, sogenannte Görtler-Wirbel ausbilden, welche eine Kühlung einer inneren Wandfläche 26 der Wandung 20 in unerwünschter Weise erschweren. Insbesondere bei einer Filmkühlung mit einem Kühlfluidfilm an der Wandfläche 26 kann es hier zu Ablösungen und folglich zu Verlusten des Kühlmittels und zu Überhitzungen im Bereich des zweiten Abschnitts 16 sowie der Stelle 22 kommen.

Figur 2 zeigt schematisch ein Beispiel einer modifizierten Schubkammer 10, deren einen Schubraum 28 begrenzende Wand 20 die Form eines Rotationshyperboloids aufweist. Die Wandfläche 26 ist bei dieser Form der Schubkammer 10 vollständig konvex auf die Längsachse 14 hin weisend gekrümmt. Sie weist also keine konkav gekrümmten Abschnitte auf. Der Schubraum 28 verjüngt sich ausgehend von einem Eintrittsbereich 30 kontinuierlich bis zur engsten Stelle 22.

Durch die kontinuierliche Krümmung der Wandung 20 lassen sich die Nachteile des klassischen Profils, nämlich auftretende Grenzschichtturbulenzen bei einer Filmkühlung, praktisch vollständig vermeiden.

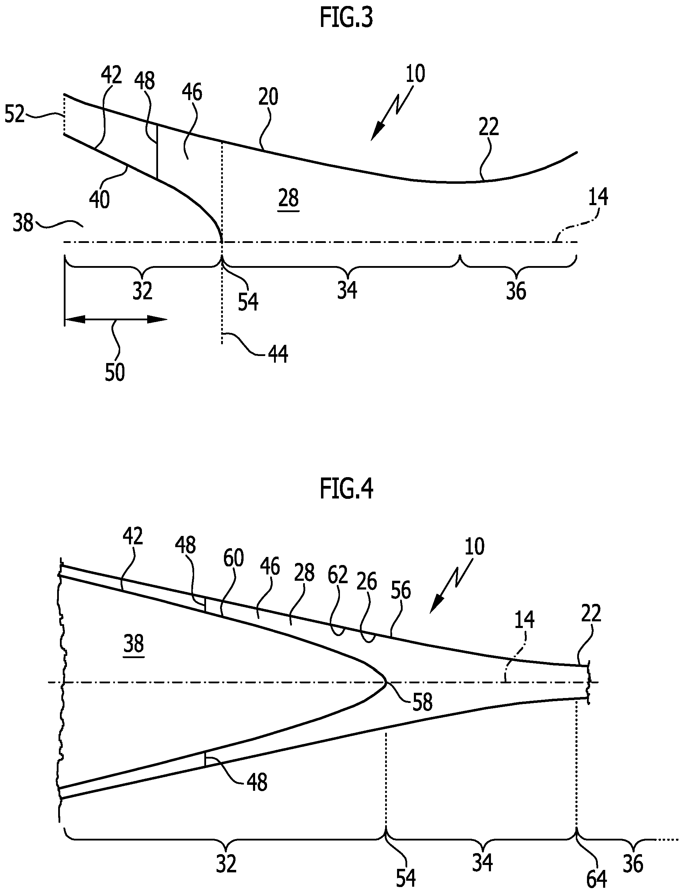

Eine dritte Variante einer Schubkammer 10 ist in Figur 3 schematisch dargestellt. Die Wandung 20 bildet hier eine äußere Wandung 20, die bezogen auf die Längsachse 14 wiederum als Rotationshyperboloid ausgebildet ist. Die Schubkammer 10 weist einen ersten Abschnitt 32, einen zweiten Abschnitt 34 und einen dritten Abschnitt 36 auf, die den Schubraum 28 in entsprechende Abschnitte 32, 34 und 36 aufteilen.

Der erste Abschnitt 32 wird definiert durch einen in den Schubraum 28 eingesetzten Einschubkörper 38, welcher eine innere Wandung 40 mit einer Wandfläche 42 des Schubraums 28 definiert, welche die Form eines zweischaligen Rotationshyperboloids aufweist. Eine Tangente 44 im Übergang zwischen dem ersten Abschnitt 32 und dem zweiten Abschnitt 34 an den Einschubkörper 38 verläuft senkrecht zur Längsachse 14.

Der erste Abschnitt 32 definiert einen Ringbrennraum 46 als Teil des Schubraums 28. Die Wandflächen 26 und 42 können insbesondere so gewählt werden, dass eine freie Querschnittsfläche 48 in Abhängigkeit eines Abstands 50 von einem ersten Ende 52 des ersten Abschnitts 32 konstant ist. Ausgehend vom ersten Ende 52 nimmt ein Außendurchmesser der durch den Ringbrennraum 46 definierten Ringfläche ab, ebenso wie ein Durchmesser einer inneren Begrenzung dieser Ringfläche. Im Übergang 54 zwischen dem ersten Abschnitt 32 und dem zweiten Abschnitt 34 geht die Ringfläche dann vorzugsweise krümmungsfrei in eine Kreisfläche über, deren Querschnitt sich zur engsten Stelle hin weiter verjüngt.

Durch den wie beschrieben bei der in Figur 3 dargestellten Schubkammer 10 konstanten Querschnitt des Ringbrennraums 46 wird ein quasi-zylindrischer Ringbrennraum 46 geschaffen, jedoch mit dem Vorteil, dass sich die Wandfläche 26 ausgehend vom ersten Ende 52 kontinuierlich verjüngt und so bei einer Kühlung keine Ablösungen und Verwirbelungen eines Kühlfluidfilms auftreten.

Die in Figur 3 schematisch dargestellte Ausgestaltung der Schubkammer 10 ist nochmals schematisch in Figur 4 mit etwas anders geformten Konturen dargestellt. Eine äußere Düsenwandung 56 ist kontinuierlich in Richtung auf die Längsachse 14 hin weisend konvex gekrümmt. Der Einschubkörper 38 ist in Form eines zweischaligen Hyperboloids ausgebildet und definiert mit seinem Ende 58 den Übergang 54 zwischen dem ersten Abschnitt 32 und dem zweiten Abschnitt 34. Die den Schubraum 28 begrenzende Wandfläche 42 definiert eine innere Schubraumfläche 60. Die den Schubraum 28 begrenzende Wandfläche 26 definiert eine äußere Schubraumfläche 62.

Im Bereich des ersten Abschnitts 32 begrenzen die innere Schubraumfläche 60 und die äußere Schubraumfläche 62 den Ringbrennraum 46. Abhängig von der Form der Schubraumflächen 60 und 62 kann die Querschnittsfläche 48 konstant sein oder in Richtung auf den Übergang 44 zu- oder abnehmen.

Vom Übergang 54 bis zur engsten Stelle 22 erstreckt sich der zweite Abschnitt 34. Hier wird der Schubraum 28 ausschließlich durch die äußere Schubraumfläche 62 begrenzt.

Ausgehend von der engsten Stelle 22 im Übergang 64 vom ersten Abschnitt 34 zum zweiten Abschnitt 36 erweitert sich der Schubraum 28 wieder.

Der erste Abschnitt 32 kann somit insbesondere einen quasi-zylindrischen Bereich bilden. Der zweite Abschnitt 34 bildet einen konvergenten Bereich des Schubraums 28 und der dritte Abschnitt 36 bildet einen divergenten Bereich, auch als Überschallbereich bezeichnet.

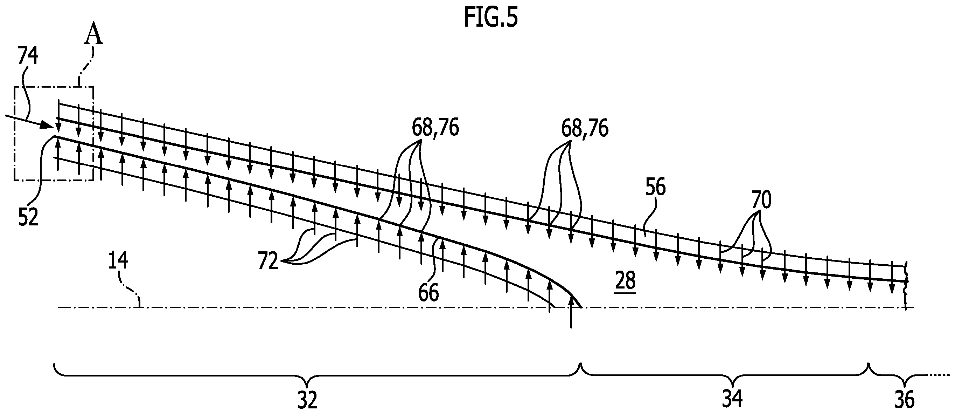

Figur 5 zeigt weitere Merkmale der Schubkammer 10.

Sowohl die äußere Düsenwandung 56 als auch eine innere Düsenwandung 66, welche die innere Schubraumfläche 60 definiert, sind mit einer Mehrzahl von ersten Treibstoffeinlässen 68 versehen. Durch diese kann in Richtung der Pfeile 70 eine erste Treibstoffkomponente durch die äußere Düsenwandung 56 in den Schubraum 28 eingespritzt oder injiziert werden. Ebenso kann diese erste Treibstoffkomponente durch die Treibstoffeinlässe 68 in der inneren Düsenwandung 66 in Richtung der Pfeile 72 in den Schubraum 28 eingespritzt werden.

Vorzugsweise erfolgt die Einspritzung der ersten Treibstoffkomponente, wie durch die Pfeile 70 und 72 dargestellt, quer, insbesondere senkrecht zur Längsachse 14.

Eine zweite Treibstoffkomponente wird, symbolisiert durch den Pfeil 74 in den ringförmigen Ringbrennraum 46 vom ersten Ende 52 her eingespritzt, wobei eine Einspritzrichtung, symbolisiert durch den Pfeil 74, im Wesentlichen parallel zur inneren und/oder äußeren Schubraumfläche 60, 62 erfolgen kann. Die Menge der ersten Treibstoffkomponente, die durch die ersten Treibstoffeinlässe 68 in den Schubraum 28 injiziert wird, ist größer, vorzugsweise deutlich größer, als sie für eine Transpirationskühlung der äußeren Düsenwandung 56 und der inneren Düsenwandung 66 erforderlich ist.

Insbesondere kann die erste Treibstoffkomponente vollständig durch die äußere Düsenwandung 56 und die innere Düsenwandung 66 in den Schubraum 28 injiziert werden.

Die innere Düsenwandung 66 und die äußere Düsenwandung 56 können zur Ausbildung der ersten Treibstoffeinlässe 68 insbesondere Injektionskanäle aufweisen, die quer, insbesondere senkrecht oder windschief zur Längsachse 14 ausgerichtet in den Schubraum 28 münden.

Alternativ können die ersten Treibstoffeinlässe 68 auch durch Poren der aus einem porösen Material ausgebildeten äußeren Düsenwandung 56 und inneren Düsenwandung 66 ausgebildet werden.

Die innere Düsenwandung 66 und die äußere Düsenwandung 56 können insbesondere aus einem keramischen Werkstoff und aus einem metallischen Werkstoff ausgebildet sein. Sie können wahlweise auch aus einer Kombination von keramischen und/oder metallischen Werkstoffen ausgebildet sein.

Durch den Zustrom der kalten flüssigen ersten Treibstoffkomponente durch die ersten Treibstoffeinlässe 68, die somit gleichzeitig eine Mehrzahl von Kühlmitteleinlässen 78 ausbilden, wird quasi eine Überkühlung der inneren und äußeren Düsenwandungen 56 und 66 erreicht. Dies ermöglicht insbesondere eine praktisch freie Wahl des Werkstoffs, aus dem die innere und äußere Düsenwandung 56, 66 ausgebildet werden, da eine Überhitzung derselben im Betrieb praktisch nicht möglich ist.

Durch den schmalen Ringbrennraum 46 kann eine gute Durchmischung und stabile Verbrennung der miteinander reagierenden Treibstoffkomponenten im Schubraum 28 erreicht werden.

Eine Porosität bei porösen Düsenwandungen 56 und 66 liegt vorzugsweise in einem Bereich von etwa 10% bis etwa 30 %, insbesondere in einem Bereich von etwa 15% bis etwa 25%. Insbesondere kann die Porosität etwa 22% betragen. Bei einer reinen Transpirationskühlung ist eine Porosität von etwa 8% erforderlich, um eine erforderliche Kühlung sicher zu erreichen. Durch die größere Porosität kann sichergestellt werden, dass eine ausreichende Menge der ersten Treibstoffkomponente, die durch die ersten Treibstoffeinlässe 68 in den Schubraum 28 injiziert wird, für die Verbrennung zur Verfügung steht. Die erste Treibstoffkomponente kann insbesondere flüssiger Wasserstoff, flüssiges Methan oder flüssiges Erdgas sein.

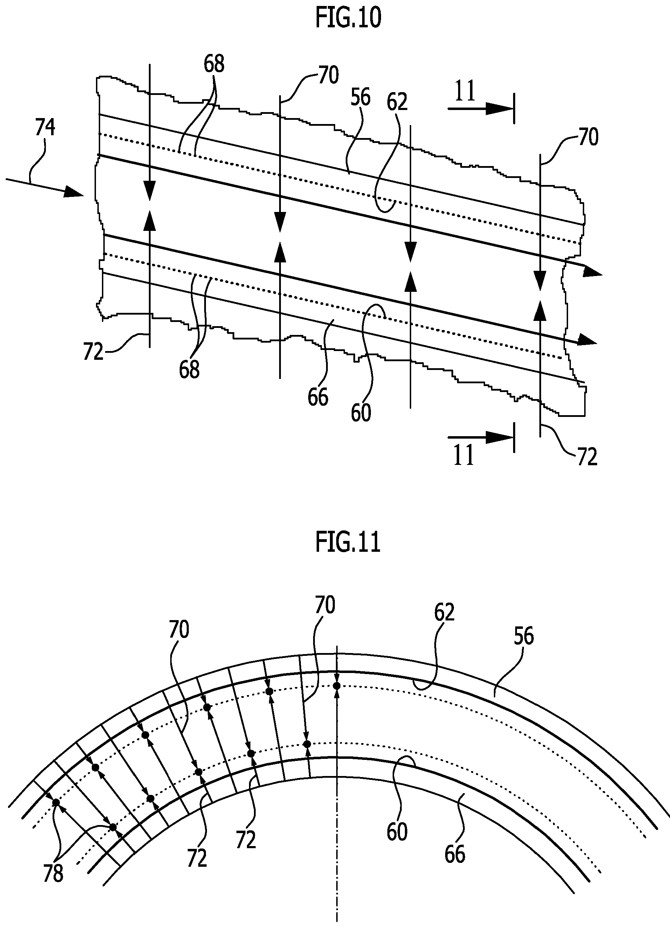

Figur 10 zeigt eine vergrößerte Ansicht des Ausschnitts A aus Figur 5. Die porösen Düsenwandungen 56 und 66 sind durch die gepunktete Linie dargestellt, die die inneren und äußeren Schubraumflächen 66 und 62 definieren.

Figur 11 zeigt eine Schnittansicht des Ausschnitts aus Figur 10. Die zweite Treibstoffkomponente, die in Richtung des Pfeils 74 eingespritzt wird, trifft dann beispielsweise in den Punkten 78 auf die quer eingespritzte erste Treibstoffkomponente. Es kommt somit zu einer gerichteten Verbrennung der ersten Treibstoffkomponente mit der zweiten Treibstoffkomponente im Ringbrennraum 46.

Bei der zweiten Treibstoffkomponente kann es sich insbesondere um flüssigen Sauerstoff handeln.

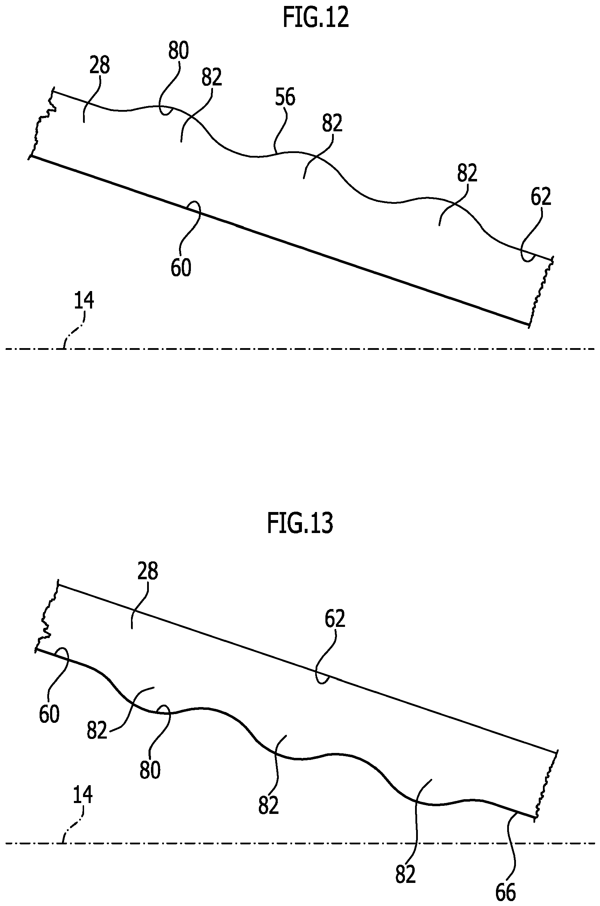

Figur 12 zeigt beispielhaft einen weiteren Ausschnitt des ersten Abschnitts 32 des Schubraums 28. Hier ist die äußere Düsenwandung 56 beispielhaft mit drei Ausbauchungen 80 ausgebildet, welche Mischbereiche 82 bilden, in denen eine Querschnittsfläche des Ringbrennraums 46 für etwas vergrößert ist. In diesen Mischbereichen 82 kann insbesondere eine Durchmischung der Treibstoffkomponenten optimiert werden.

Eine Alternative zu der in Figur 12 dargestellten Ausgestaltung beziehungsweise Variante ist in Figur 13 schematisch dargestellt. Hier werden Mischbereiche 82 gebildet durch Ausbauchungen 80 der inneren Düsenwandung 66. Auch so lässt sich eine Querschnittserweiterung im Ringbrennraum 56 über eine Länge parallel zur Längsachse 14 erreichen.

Optional können Ausbauchungen 80 auch an der äußeren Düsenwandung 56 und der inneren Düsenwandung 66 vorgesehen werden zur Ausbildung von Mischbereichen 82.

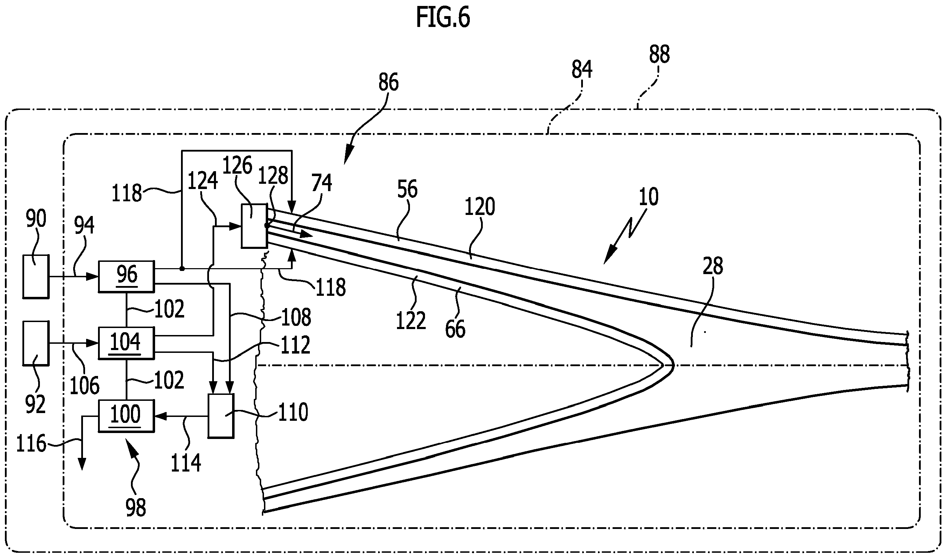

Figur 6 zeigt schematisch ein Triebwerk 84 mit einer Schubkammervorrichtung 86 umfassend eine wiederum schematisch dargestellte Schubkammer 10. Der Schubraum 28 entspricht in seiner Form dem in Figur 4 dargestellten Schubraum 28.

Das Triebwerk 84 kann zum Antreiben eines Flugkörpers 88 oder Fluggeräts dienen.

Der Flugkörper 88 umfasst einen ersten Treibstoffspeicher 90 für eine flüssige erste Treibstoffkomponente und einen zweiten Treibstoffspeicher 92 für eine zweite flüssige Treibstoffkomponente. Vorzugsweise handelt es sich bei der ersten Treibstoffkomponente um den Brennstoff, bei der zweiten Treibstoffkomponente um den Oxidator.

Über eine Treibstoffleitung 94 wird die erste Treibstoffkomponente aus den ersten Treibstoffspeichern 90 zu einem Pumpenrad 96 einer Pumpeinrichtung 98 geleitet. Diese umfasst eine Turbine 100, auf deren Welle 102 das erste Pumpenrad 96 und ein zweites Pumpenrad 104 angeordnet sind.

Über eine zweite Treibstoffleitung 106 wir die zweite Treibstoffkomponente dem zweiten Pumpenrad zugeführt.

Über eine dritte Treibstoffleitung 108 wird die erste Treibstoffkomponente vom Pumpenrad 96 zu einer Vorbrennkammer 110 gefördert.

Die zweite Treibstoffkomponente wird vom zweiten Pumpenrad 104 über eine dritte Treibstoffleitung 112 zur Vorbrennkammer 110 gefördert. Dort wird ein Teil der ersten und zweiten Treibstoffkomponenten verbrannt. Mit den Verbrennungsgasen, die über eine Zuleitung 114 zur Turbine 110 der Pumpeinrichtung geleitet werden, wird die Turbine 100 angetrieben. Die Verbrennungsabgase 116 werden von der Vorbrennkammer 110 abgeleitet und nicht weiter genutzt.

Über fünfte Treibstoffleitungen 118 wird die erste Treibstoffkomponente vom ersten Pumpenrad 96 zu einem Verteiler 120 an der äußeren Düsenwandung 56 sowie zu einem Verteiler 122 an der inneren Düsenwandung 66 geleitet. Von den Verteilern 120 und 122 kann dann die erste Treibstoffkomponente zu den in Figur 6 nicht dargestellten ersten Treibstoffeinlässen 68 und durch diese hindurch in den Schubraum 28 strömen.

Das zweite Pumpenrad 104 fördert durch eine sechste Treibstoffleitung 124 einen Teil der zweiten Treibstoffkomponente zu einer Injektionseinrichtung 126, welche eine das erste Ende 52 des Schubraums 28 verschließende Injektionswand mit mindestens einem zweiten Treibstoffauslass 128 oder einer Mehrzahl zweiter Treibstoffauslässe 128 umfasst, durch die die zweite Treibstoffkomponente durch das erste Ende 52 in den Ringbrennraum 46 eingespritzt wird.

In Figur 6 ist somit schematisch der Aufbau eines Gasgenerator-Triebwerks dargestellt.

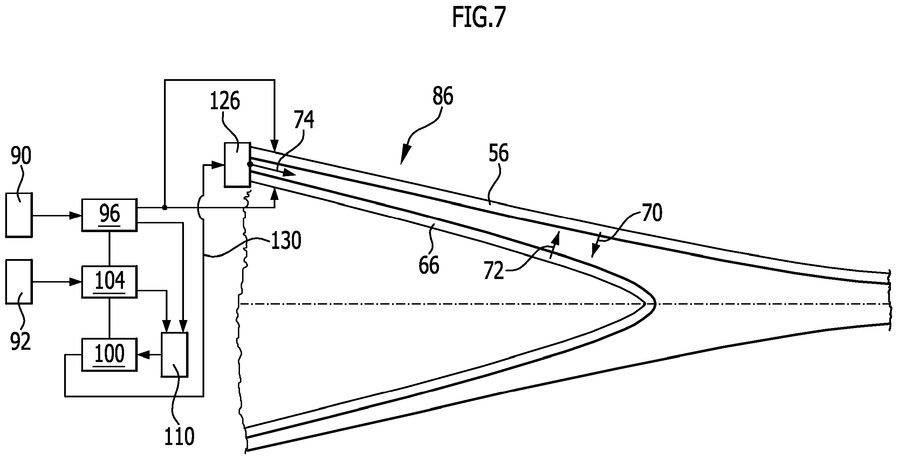

Figur 7 zeigt schematisch eine alternative Ausgestaltung einer Schubkammervorrichtung 86, die in ihrem Aufbau im Wesentlichen mit der Schubkammervorrichtung 86 aus Figur 6 übereinstimmt.

Allerdings wird die in Figur 7 dargestellte Schubkammervorrichtung im Vorbrenner-Zyklus betrieben. Das heißt der Vorbrennkammer 110 wird ein Gemisch der beiden Treibstoffkomponenten zugeführt, bei dem die zweite Treibstoffkomponente weit überwiegt.

Eine Abgasleitung von der Turbine 100 mit dem Verbrennungsabgas aus der Vorbrennkammer 110 und dem noch nicht reagierten Oxidator als zweiter Treibstoffkomponente wird durch die Abgasleitung 130 der Injektionseinrichtung 126 zugeführt.

Ein die in Figur 7 dargestellte Schubkammervorrichtung 86 umfassendes Triebwerk 84 kann wie beschrieben in einem Vorbrenner-Zyklus betrieben werden, so dass hier keine Verluste von Verbrennungsgasen auftreten können, sondern auch die Verbrennungsgase der Vorbrennkammer, die zum Antreiben der Turbine 100 genutzt werden, in den Schubraum 28 gelangen zum Erzeugen eines Schubs des Triebwerks 84.

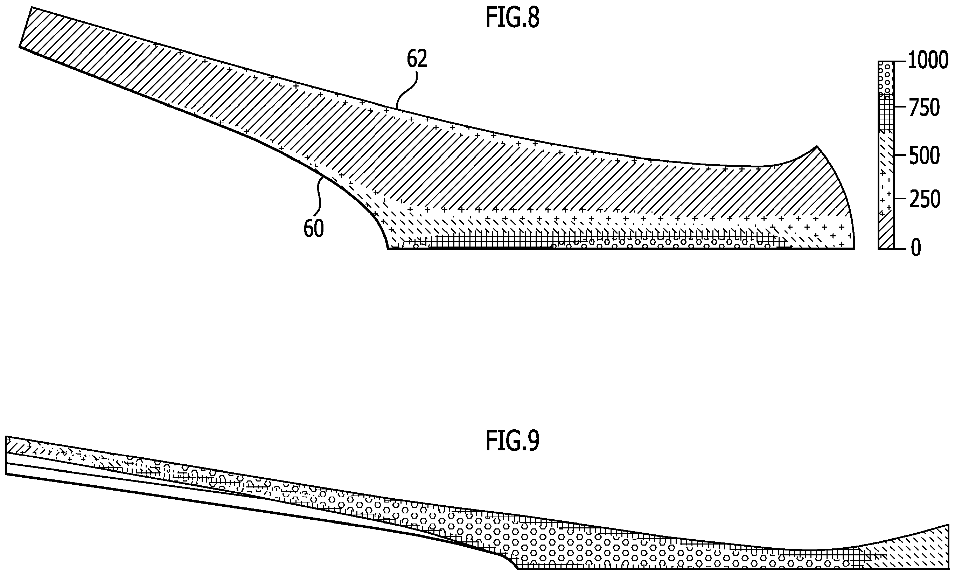

Figur 8 zeigt eine Strömungsverteilung in einer Schubkammer 10, wie sie oben beschrieben ist. Entlang den inneren und äußeren Schubraumflächen 60 und 62 ergibt sich ein homogenes wandnahes Viskositätsprofil aus einer Heiß-Gas-Simulation. Auf der Skala rechts des dargestellten Viskositätsprofils sind Reynoldszahlen im Bereich von 0 bis 1000 angegeben, die zu den Helligkeiten im Viskositätsprofil korrespondieren.

Und schließlich zeigt Figur 9 ein Simulationsbeispiel für eine effiziente Verbrennung, die erreicht wird, wenn die erste Treibstoffkomponente und die zweite Treibstoffkomponente vollständig getrennt voneinander in den Schubraum 28 injiziert werden. Der Brennstoff als erste Treibstoffkomponente wird ausschließlich durch die ersten Treibstoffeinlässe 68 in der äußeren Düsenwandung 56 und der inneren Düsenwandung 66 in den Schubraum 28 eingespritzt. Die zweite Treibstoffkomponente wird ausschließlich durch die Injektionswandung der Injektionseinrichtung 126, die das erste Ende 52 des Schubraums 28 verschließt, injiziert.

Durch die satte oder übergesättigte Durchströmung der inneren und äußeren Düsenwandungen 56 und 66 mit der ersten Treibstoffkomponente kann eine bessere Kühlung derselben erreicht werden, und zwar ohne Massenstromverluste der ersten Treibstoffkomponente. Ebenso sind Druckverluste, wenn sie denn überhaupt auftreten, deutlich verringert. Auf diese Weise kann eine Überhitzung der inneren und äußeren Düsenwandung 56, 66 vermieden werden.

Eine Verbrennung wird beim Vorsehen eines Einschubkörpers 38 verbessert. Zudem wird das System der Schubkammervorrichtung 86 insgesamt vereinfacht, da sich der Aufbau der Injektionseinrichtung 126 vereinfacht. Diese dient insbesondere ausschließlich zur Injektion der zweiten Treibstoffkomponente.

Die vorgeschlagene Weiterbildung bekannter Schubkammervorrichtungen ermöglicht insbesondere auch den effizienten Einsatz von Methan in flüssiger Form, insbesondere auch direkt als Erdgas als Brennstoff beziehungsweise erste Treibstoffkomponente.

### Bezugszeichenliste

- 10: Schubkammer
- 12: erster Abschnitt
- 14: Längsachse
- 16: zweiter Abschnitt
- 18: dritter Abschnitt
- 20: Wandung
- 22: engste Stelle
- 24: Düsenaustritt
- 26: Wandfläche
- 28: Schubraum
- 30: Eintrittsbereich
- 32: erster Abschnitt
- 34: zweiter Abschnitt
- 36: dritter Abschnitt
- 38: Einschubkörper
- 40: Wandung
- 42: Wandfläche
- 44: Tangente
- 46: Ringbrennraum
- 48: Querschnittsfläche
- 50: Abstand
- 52: erstes Ende
- 54: Übergang
- 56: äußere Düsenwand
- 58: Ende
- 60: innere Schubraumfläche
- 62: äußere Schubraumfläche
- 64: Übergang
- 66: innere Düsenwandung
- 68: erster Treibstoffeinlass
- 70: Pfeile
- 72: Pfeile
- 74: Pfeile
- 76: Kühlmitteleinlass
- 78: Punkt
- 80: Ausbauchungen
- 82: Mischbereich
- 84: Triebwerk
- 86: Schubkammervorrichtung
- 88: Flugkörper
- 90: erster Treibstoffspeicher
- 92: zweiter Treibstoffspeicher
- 94: Treibstoffleitung
- 96: erstes Pumpenrad
- 98: Pumpeinrichtung
- 100: Turbine
- 102: Welle
- 104: zweites Pumpenrand
- 106: zweite Treibstoffleitung
- 108: dritte Treibstoffleitung
- 110: Vorbrennkammer
- 112: vierte Treibstoffleitung
- 114: Zuleitung
- 116: Abgas
- 118: fünfte Treibstoffleitung
- 120: Verteiler
- 122: Verteiler
- 124: sechste Treibstoffleitung
- 126: Injektionseinrichtung
- 128: zweiter Treibstoffauslass
- 130: Abgasleitung

## Patentansprüche

1. Schubkammervorrichtung (86), umfassend eine Schubkammer (10) mit einem Schubraum (28), welcher einen ersten Abschnitt (32), einen sich daran anschließenden zweiten Abschnitt (34) und einen sich an den zweiten Abschnitt (34) anschließenden dritten Abschnitt (36) aufweist, wobei der Schubraum (28) in allen drei Abschnitten (32, 34, 36) von einer äußeren Düsenwandung (56) mit einer äußeren Schubraumfläche (62) begrenzt ist, welche äußere Schubraumfläche (62) sich im ersten und zweiten Abschnitt (32, 34) zum dritten Abschnitt (34) hin verjüngt, im dritten Abschnitt (34) von dem zweiten Abschnitt (34) weg erweitert und eine engste Stelle (22) am Übergang von dem zweiten Abschnitt (34) zu dem dritten Abschnitt (36) ausgebildet ist, wobei der erste Abschnitt (32) von einer inneren Düsenwandung (66) mit einer inneren Schubraumfläche (60) begrenzt ist, welche sich zum zweiten Abschnitt (34) hin verjüngt, wobei zwischen der inneren Schubraumfläche (60) und der äußeren Schubraumfläche (62) ein Ringbrennraum (46) ausgebildet ist, welcher sich über den ersten Abschnitt (32) erstreckt, wobei die Schubkammervorrichtung (86) ferner eine Mehrzahl erster Treibstoffeinlässe (68) für eine erste Treibstoffkomponente und eine Mehrzahl zweiter Treibstoffeinlässe (128) für eine zweite Treibstoffkomponente umfasst, **dadurch gekennzeichnet, dass** die äußere Düsenwandung (56) mindestens einen Teil der Mehrzahl erster Treibstoffeinlässe (68) umfasst, dass der erste Abschnitt (32) des Schubraums (28) auf einer vom zweiten Abschnitt (34) weg weisenden Seite von einer Injektionswandung (126) begrenzt ist, welche die innere Düsenwandung (66) und die äußere Düsenwandung (56) miteinander verbindet, und dass die Mehrzahl zweiter Treibstoffeinlässe (128) ausschließlich in der Injektionswandung (126) angeordnet oder ausgebildet ist.

2. Schubkammervorrichtung nach Anspruch 1, **dadurch gekennzeichnet, dass** die äußere Düsenwandung (56) mindestens teilweise fluiddurchlässig ausgebildet ist zum Ausbilden mindestens eines Teils der Mehrzahl erster Treibstoffeinlässe (68).

3. Schubkammervorrichtung nach Anspruch 1 oder 2, **dadurch gekennzeichnet, dass** die äußere Düsenwandung (56) porös ausgebildet ist zum Ausbilden mindestens eines Teils der Mehrzahl erster Treibstoffeinlässe (68)
wobei insbesondere
a) eine Porosität der äußeren Düsenwandung (56) mindestens teilweise mindestens etwa 10% beträgt, vorzugsweise etwa mindestens 15%, weiter vorzugsweise etwa mindestens etwa 20%,
und/oder
b) sich eine Porosität der äußeren Düsenwandung (56) in Abhängigkeit eines Abstands (50) von einem ersten Ende (52) des ersten Abschnitts (32) ändert,
wobei insbesondere die Porosität ausgehend vom ersten Ende (52) des ersten Abschnitts (32) in Richtung auf die engste Stelle (22) hin abnimmt.

4. Schubkammervorrichtung nach einem der voranstehenden Ansprüche, **dadurch gekennzeichnet, dass** die innere Düsenwandung (66) mindestens einen Teil der Mehrzahl erster Treibstoffeinlässe (68) umfasst.

5. Schubkammervorrichtung nach einem der voranstehenden Ansprüche, **dadurch gekennzeichnet, dass** die innere Düsenwandung (66) mindestens teilweise fluiddurchlässig ausgebildet ist zum Ausbilden mindestens eines Teils der Mehrzahl erster Treibstoffeinlässe (68).

6. Schubkammervorrichtung nach Anspruch 5, **dadurch gekennzeichnet, dass** die innere Düsenwandung (66) porös ausgebildet ist zum Ausbilden mindestens eines Teils der Mehrzahl erster Treibstoffeinlässe (68) wobei insbesondere
a) eine Porosität der inneren Düsenwandung (66) mindestens etwa 10% beträgt, vorzugsweise etwa mindestens 15%, weiter vorzugsweise etwa mindestens etwa 20%,
und/oder
b) sich eine Porosität der inneren Düsenwandung (66) in Abhängigkeit eines Abstands (50) von einem ersten Ende (52) des ersten Abschnitts ändert,
wobei insbesondere die Porosität ausgehend vom ersten Ende (52) des ersten Abschnitts (32) in Richtung auf den zweiten Abschnitt (34) hin abnimmt.

7. Schubkammervorrichtung nach einem der voranstehenden Ansprüche, **dadurch gekennzeichnet, dass**
a) alle ersten Treibstoffeinlässe (68) in der äußeren Düsenwandung (56) und der inneren Düsenwandung (66) angeordnet oder ausgebildet sind
und/oder
b) die innere Düsenwandung (66) und die äußere Düsenwandung (56)
ausschließlich erste Treibstoffeinlässe (68) aufweisen
und/oder
c) die innere Düsenwandung (66) und/oder die äußere Düsenwandung (56) aus einem keramischen und/oder metallischen Werkstoff ausgebildet sind
und/oder
d) die innere Düsenwandung (66) eine Mehrzahl innerer Kühlmitteleinlässe (78) und/oder dass die äußere Düsenwandung (56) eine Mehrzahl äußerer Kühlmitteleinlässe (78) für ein Kühlmittel zum Kühlen der inneren Düsenwandung (66) und/oder der äußeren Düsenwandung (56) aufweisen,
wobei insbesondere die Mehrzahl erster Treibstoffeinlässe (68) die Mehrzahl innerer Kühlmitteleinlässe (78) und/oder die Mehrzahl äußerer Kühlmitteleinlässe (78) bildet
und/oder
e) die Injektionswandung (126) ringförmig ausgebildet ist zum
Verschließen des ringförmigen Ringbrennraums (46) und/oder
f) die Injektionswandung (126) ausschließlich zweite Treibstoffeinlässe (128) umfasst
und/oder
g) die Mehrzahl zweiter Treibstoffeinlässe (128) in Form von Kanälen ausgebildet sind, welche in den Ringbrennraum (46) weisende Kanalmündungen aufweisen.

8. Schubkammervorrichtung nach einem der voranstehenden Ansprüche, **dadurch gekennzeichnet, dass**
a) die innere Schubraumfläche (60) in Richtung auf die äußere Schubraumfläche (62) hin weisend konvex gekrümmt oder im Wesentlichen konvex gekrümmt ausgebildet ist
und/oder
b) die äußere Schubraumfläche (62)in Richtung auf die innere Schubraumfläche (60) hin weisend konvex gekrümmt oder im Wesentlichen konvex gekrümmt ausgebildet ist
und/oder
c) die Schubkammer (28) eine Längsachse (14) definiert und dass die Schubkammer (28), insbesondere der erste Abschnitt (32) und/oder der zweite Abschnitt (34) und/oder der dritte Abschnitt (36), rotationssymmetrisch bezogen auf die Längsachse (14) ausgebildet sind.

9. Schubkammervorrichtung nach Anspruch 8, **dadurch gekennzeichnet, dass**
a) die äußere Schubraumfläche (62) und/oder die innere Schubraumfläche (60) rotationssymmetrisch bezogen auf die Längsachse (14) ausgebildet sind
und/oder
b) die innere Schubraumfläche (60) und/oder die äußere Schubraumfläche (62) mindestens teilweise die Form eines Rotationshyperboloids aufweisen
und/oder
c) der Ringbrennraum (46) eine konstante oder im Wesentlichen konstante Querschnittsfläche (48) aufweist.

10. Schubkammervorrichtung nach einem der voranstehenden Ansprüche, **dadurch gekennzeichnet, dass**
a) sich eine Querschnittsfläche (48) des Ringbrennraums (46) in Abhängigkeit eines Abstands (50) von einem ersten Ende (52) des Ringbrennraums (46) ändert zur Ausbildung mindestens eines Treibstoffmischbereichs (82) im Ringbrennraum (46)
und/oder
b) die Schubkammervorrichtung eine erste Injektionseinrichtung umfasst zum Injizieren der mindestens einen ersten Treibstoffkomponente in den Schubraum (28) in einer Richtung (70, 72) quer, insbesondere senkrecht, zur inneren Schubraumfläche (60) und/oder zur äußeren Schubraumfläche (62),
wobei insbesondere die erste Injektionseinrichtung eine erste Pumpeinrichtung (96) zum Pumpen der mindestens einen ersten Treibstoffkomponente aus einem ersten Treibstoffspeicher (90) durch die Mehrzahl erster Treibstoffeinlässe (68) in den Schubraum (28) umfasst.

11. Schubkammervorrichtung nach einem der voranstehenden Ansprüche, **gekennzeichnet durch** eine zweite Injektionseinrichtung zum Injizieren der mindestens einen zweiten Treibstoffkomponente in den ersten Abschnitt (32) in einer Richtung (74) parallel oder im Wesentlichen parallel zu Tangenten an die innere Schubraumfläche (60) und/oder die äußere Schubraumfläche (62),
wobei insbesondere die zweite Injektionseinrichtung eine zweite Pumpeinrichtung (104) zum Pumpen der mindestens einen zweiten Treibstoffkomponente aus einem zweiten Treibstoffspeicher (92) durch die Mehrzahl zweiter Treibstoffeinlässe (128) in den ersten Abschnitt (32) umfasst.

12. Triebwerk (84), insbesondere für einen Flugkörper (88) oder ein Fluggerät, umfassend einen Schubkammervorrichtung (86) nach einem der voranstehenden Ansprüche.

13. Flugkörper (88) oder Fluggerät, umfassend einen ersten Treibstoffspeicher (90) für mindestens eine erste Treibstoffkomponente, einen zweiten Treibstoffspeicher (92) für mindestens eine zweite Treibstoffkomponente und ein Triebwerk (84) nach Anspruch 12.

14. Verfahren zum Betreiben einer Schubkammervorrichtung (86) nach einem der Ansprüche 1 bis 13, **dadurch gekennzeichnet, dass** mindestens durch einen Teil der Mehrzahl erster Treibstoffeinlässe (68) eine größere Menge der ersten Treibstoffkomponente in den Schubraum (28) injiziert wird als zur Kühlung der inneren Düsenwandung (66) und/oder der äußeren Düsenwandung (56) erforderlich ist.

15. Verfahren nach Anspruch 14, **dadurch gekennzeichnet, dass**
a) mindestens eine mehr als doppelt so große Menge der ersten Treibstoffkomponente durch die Mehrzahl erster Treibstoffeinlässe (68) injiziert wird als zur Kühlung der inneren Düsenwandung (66) und/oder der äußeren Düsenwandung (56) erforderlich ist
und/oder
b) die gesamte erste Treibstoffkomponente durch die Mehrzahl erster Treibstoffeinlässe (68) in den Schubraum (28) injiziert wird.

## Claims

1. A thrust chamber device (86), comprising a thrust chamber (10) with a thrust space (28) having a first portion (32), a second portion (34) adjacent thereto, and a third portion (36) adjacent to the second portion (34), the thrust space (28) being delimited in all three portions (32, 34, 36) by an outer nozzle wall (56) having an outer thrust space surface (62), which outer thrust space surface (62) tapers in the first and second portion (32, 34) toward the third portion (36), widens in the third portion (36) away from the second portion (34), and has a narrowest point (22) at the transition from the second portion (34) to the third portion (36), the first portion (32) being delimited by an inner nozzle wall (66) with an inner thrust space surface (60), which tapers toward the second portion (34), an annular combustion chamber (46) being formed between the inner thrust space surface (60) and the outer thrust space surface (62) and extending over the first portion (32), the thrust chamber device (86) also comprising a plurality of first propellant inlets (68) for a first propellant component and a plurality of second propellant inlets (128) for a second propellant component, **characterised in that** the outer nozzle wall (56) comprises at least a part of the plurality of first propellant inlets (68), **in that** the first portion (32) of the thrust space (28) is delimited on a side facing away from the second portion (34) by an injection wall (126), which connects the inner nozzle wall (66) and the outer nozzle wall (56) to one another, and **in that** the plurality of second propellant inlets (128) is arranged or formed only in the injection wall (126).

2. A thrust chamber device in accordance with claim 1, **characterised in that** the outer nozzle wall (56) is at least partially fluid-permeable so as to form at least a part of the plurality of first propellant inlets (68).

3. A thrust chamber device in accordance with claim 1 or 2, **characterised in that** the outer nozzle wall (56) is porous so as to form at least a part of the plurality of first propellant inlets (68),
wherein, in particular,
a) a porosity of the outer nozzle wall (56) is at least approximately 10% at least in part,
preferably approximately at least 15%,
more preferably approximately at least approximately 20%,
and/or
b) a porosity of the outer nozzle wall (56) changes as a function of the spacing (50) from a first end (52) of the first portion (32), wherein, in particular, the porosity decreases starting from the first end (52) of the first portion (32) toward the narrowest point (22).

4. A thrust chamber device in accordance with one of the preceding claims, **characterised in that** the inner nozzle wall (66) comprises at least a part of the plurality of first propellant inlets (68).

5. A thrust chamber device in accordance with one of the preceding claims, **characterised in that** the inner nozzle wall (66) is at least partially fluid-permeable so as to form at least a part of the plurality of first propellant inlets (68).

6. A thrust chamber device in accordance with claim 5, **characterised in that** the inner nozzle wall (66) is porous so as to form at least a part of the plurality of first propellant inlets (68),
wherein, in particular,
a) a porosity of the inner nozzle wall (66) is at least approximately 10%,
preferably approximately at least 15%,
more preferably approximately at least approximately 20%,
and/or
b) a porosity of the inner nozzle wall (66) changes as a function of the spacing (50) from a first end (52) of the first portion,
wherein, in particular, the porosity decreases starting from the first end (52) of the first portion (32) toward the second portion (34).

7. A thrust chamber device in accordance with one of the preceding claims, **characterised in that**
a) all first propellant inlets (68) are arranged or formed in the outer nozzle wall (56) and the inner nozzle wall (66)
and/or
b) the inner nozzle wall (66) and the outer nozzle wall (56) have only first propellant inlets (68)
and/or
c) the inner nozzle wall (66) and/or the outer nozzle wall (56) are/is formed from a ceramic and/or metallic material,
and/or
d) the inner nozzle wall (66) has a plurality of inner coolant inlets (78), and/or **in that** the outer nozzle wall (56) has a plurality of outer coolant inlets (78) for a coolant for cooling the inner nozzle wall (66) and/or the outer nozzle wall (56),
wherein, in particular, the plurality of first propellant inlets (68) forms the plurality of inner coolant inlets (78) and/or the plurality of outer coolant inlets (78),
and/or
e) the injection wall (126) is ring-shaped in order to close the ring-shaped annular combustion chamber (46)
and/or
f) the injection wall (126) comprises only second propellant inlets (128)
and/or
g) the plurality of second propellant inlets (128) is provided in the form of channels, which have channel mouths directed into the annular combustion chamber (46).

8. A thrust chamber device in accordance with one of the preceding claims, **characterised in that**
a) the inner thrust space surface (60) is convexly curved or substantially convexly curved in the direction of the outer thrust space surface (62)
and/or
b) the outer thrust space surface (62) is convexly curved or substantially convexly curved in the direction of the inner thrust space surface (60)
and/or
c) the thrust chamber (28) defines a longitudinal axis (14), and **in that** the thrust chamber (28), in particular the first portion (32) and/or the second portion (34) and/or the third portion (36), are rotationally symmetrical with respect to the longitudinal axis (14).

9. A thrust chamber device in accordance with claim 8, **characterised in that**
a) the outer thrust space surface (62) and/or the inner thrust space surface (60) are rotationally symmetrical with respect to the longitudinal axis (14)
and/or
b) the inner thrust space surface (60) and/or the outer thrust space surface (62) have the form of a hyperboloid of revolution at least in part
and/or
c) the annular combustion chamber (46) has a constant or substantially constant cross-sectional area (48).

10. A thrust chamber device in accordance with one of the preceding claims, **characterised in that**
a) the cross-sectional area (48) of the annular combustion chamber (46) changes as a function of a spacing (50) from a first end (52) of the annular combustion chamber (46) so as to form at least one propellant mixing region (82) in the annular combustion chamber (46)
and/or
b) the thrust chamber device comprises a first injection device for injecting the at least one first propellant component into the thrust space (28) in a direction (70, 72) transverse, in particular perpendicular, to the inner thrust space surface (60) and/or the outer thrust space surface (62),
wherein, in particular, the first injection device comprises a first pump device (96) for pumping the at least one first propellant component from a first propellant store (90), through the plurality of first propellant inlets (68), into the thrust space (28).

11. A thrust chamber device in accordance with one of the preceding claims, **characterised by** a second injection device for injecting the at least one second propellant into the first portion (32) in a direction (74) parallel or substantially parallel to tangents to the inner thrust space surface (60) and/or the outer thrust space surface (62),
wherein, in particular, the second injection device comprises a second pump device (104) for pumping the at least one second propellant component from a second propellant store (92), through the plurality of second propellant inlets (128), into the first portion (32).

12. An engine (84), in particular for a flying object (88) or an aircraft, comprising a thrust chamber device (86) in accordance with one of the preceding claims.

13. A flying object (88) or aircraft, comprising a first propellant store (90) for at least one first propellant component, a second propellant store (92) for at least one second propellant component, and an engine (84) in accordance with claim 12.

14. A method for operating a thrust chamber device (86) in accordance with one of claims 1 to 13, **characterised in that** a greater amount of the first propellant component than is necessary for cooling the inner nozzle wall (66) and/or the outer nozzle wall (56) is injected into the thrust space (28) through a part of the plurality of first propellant inlets (68).

15. A method in accordance with claim 14, **characterised in that**
a) at least an amount of the first propellant component more than twice the amount necessary for cooling of the inner nozzle wall (66) and/or the outer nozzle wall (56) is injected through the plurality of first propellant inlets (68)
and/or
b) the entire first propellant component is injected into the thrust space (28) through the plurality of first propellant inlets (68).

## Revendications

1. Dispositif de chambre de poussée (86), comprenant une chambre de poussée (10) avec un espace de poussée (28), lequel présente une première section (32), une deuxième section (34) se raccordant à celle-ci et une troisième section (36) se raccordant à la deuxième section (34), dans lequel l'espace de poussée (28) est délimité dans l'ensemble des trois sections (32, 34, 36) par une paroi de buse extérieure (56) avec une surface d'espace de poussée extérieure (62), laquelle surface d'espace de poussée extérieure (62) s'amincit dans la première et deuxième section (32, 34) en direction de la troisième section (34), s'élargit dans la troisième section (34) en s'éloignant de la deuxième section (34) et un endroit le plus étroit (22) est réalisé sur la transition de la deuxième section (34) vers la troisième section (36), dans lequel la première section (32) est délimitée par une paroi de buse intérieure (66) avec une surface d'espace de poussée intérieure (60), laquelle s'amincit en direction de la deuxième section (34), dans lequel un espace de combustion annulaire (46) est réalisé entre la surface d'espace de poussée intérieure (60) et la surface d'espace de poussée extérieure (62), lequel s'étend sur la première section (32), dans lequel le dispositif de chambre de poussée (86) comprend en outre une pluralité de premières entrées de carburant (68) pour un premier composant de carburant et une pluralité de deuxièmes entrées de carburant (128) pour un deuxième composant de carburant, **caractérisé en ce que** la paroi de buse extérieure (56) comprend au moins une partie de la pluralité de premières entrées de carburant (68), que la première section (32) de l'espace de poussée (28) est délimitée sur une face éloignée de la deuxième section (34) par une paroi d'injection (126), laquelle relie la paroi de buse intérieure (66) et la paroi de buse extérieure (56), et que la pluralité de deuxièmes entrées de carburant (128) est disposée ou réalisée exclusivement dans la paroi d'injection (126).

2. Dispositif de chambre de poussée selon la revendication 1, **caractérisé en ce que** la paroi de buse extérieure (56) est réalisée au moins en partie de manière perméable au fluide pour la réalisation d'au moins une partie de la pluralité de premières entrées de carburant (68).

3. Dispositif de chambre de poussée selon la revendication 1 ou 2, **caractérisé en ce que** la paroi de buse extérieure (56) est réalisée de manière poreuse pour la réalisation d'au moins une partie de la pluralité de premières entrées de carburant (68) dans lequel en particulier
a) une porosité de la paroi de buse extérieure (56) atteint au moins en partie au moins environ 10 %, de préférence environ au moins 15 %, plus préférablement environ au moins environ 20 %,
et/ou
b) une porosité de la paroi de buse extérieure (56) change en fonction d'une distance (50) par rapport à une première extrémité (52) de la première section (32),
dans lequel en particulier la porosité diminue à partir de la première extrémité (52) de la première section (32) en direction du point le plus étroit (22).

4. Dispositif de chambre de poussée selon l'une quelconque des revendications précédentes, **caractérisé en ce que** la paroi de buse intérieure (66) comprend au moins une partie de la pluralité de premières entrées de carburant (68).

5. Dispositif de chambre de poussée selon l'une quelconque des revendications précédentes, **caractérisé en ce que** la paroi de buse intérieure (66) est réalisée au moins en partie de manière perméable au fluide pour la réalisation d'au moins une partie de la pluralité de premières entrées de carburant (68).

6. Dispositif de chambre de poussée selon la revendication 5, **caractérisé en ce que** la paroi de buse intérieure (66) est réalisée de manière poreuse pour la réalisation d'au moins une partie de la pluralité de premières entrées de carburant (68)
dans lequel en particulier
a) une porosité de la paroi de buse intérieure (66) atteint au moins environ 10 %, de préférence environ au moins 15 %, plus préférablement environ au moins environ 20 %,
et/ou
b) une porosité de la paroi de buse intérieure (66) change en fonction d'une distance (50) par rapport à une première extrémité (52) de la première section,
dans lequel en particulier la porosité diminue à partir de la première extrémité (52) de la première section (32) en direction de la deuxième section (34).

7. Dispositif de chambre de poussée selon l'une quelconque des revendications précédentes, **caractérisé en ce que**
a) les premières entrées de carburant (68) sont toutes disposées ou réalisées dans la paroi de buse extérieure (56) et la paroi de buse intérieure (66)
et/ou
b) la paroi de buse intérieure (66) et la paroi de buse extérieure (56) présentent exclusivement des premières entrées de carburant (68)
et/ou
c) la paroi de buse intérieure (66) et/ou la paroi de buse extérieure (56) sont réalisées à partir d'un matériau céramique et/ou métallique
et/ou
d) la paroi de buse intérieure (66) présente une pluralité d'entrées de liquide de refroidissement intérieures (78) et/ou que la paroi de buse extérieure (56) présente une pluralité d'entrées de liquide de refroidissement extérieures (78) pour un liquide de refroidissement pour le refroidissement de la paroi de buse intérieure (66) et/ou de la paroi de buse extérieure (56),
dans lequel en particulier la pluralité de premières entrées de carburant (68) forme la pluralité d'entrées de liquide de refroidissement intérieures (78) et/ou la pluralité d'entrées de liquide de refroidissement extérieures (78)
et/ou
e) la paroi d'injection (126) est réalisée en forme d'anneau pour la fermeture de l'espace de combustion annulaire (46) en forme d'anneau
et/ou
f) la paroi d'injection (126) comprend exclusivement des deuxièmes entrées de carburant (128)
et/ou
g) la pluralité de deuxièmes entrées de carburant (128) sont réalisées sous forme de canaux, lesquels présentent des embouchures de canal orientées dans l'espace de combustion annulaire (46).

8. Dispositif de chambre de poussée selon l'une quelconque des revendications précédentes, **caractérisé en ce que**
a) la surface d'espace de poussée intérieure (60) est réalisée de manière courbée de façon convexe ou sensiblement de manière courbée de façon convexe de manière orientée en direction de la surface d'espace de poussée extérieure (62)
et/ou
b) la surface d'espace de poussée extérieure (62) est réalisée de manière courbée de façon convexe ou sensiblement de manière courbée de façon convexe de manière orientée en direction de la surface d'espace de poussée intérieure (60)
et/ou
c) la chambre de poussée (28) définit un axe longitudinal (14) et que la chambre de poussée (28), en particulier la première section (32) et/ou la deuxième section (34) et/ou la troisième section (36), sont réalisées à symétrie de rotation par rapport à l'axe longitudinal (14).

9. Dispositif de chambre de poussée selon la revendication 8, **caractérisé en ce que**
a) la surface d'espace de poussée extérieure (62) et/ou la surface d'espace de poussée intérieure (60) sont réalisées à symétrie de rotation par rapport à l'axe longitudinal (14)
et/ou
b) la surface d'espace de poussée intérieure (60) et/ou la surface d'espace de poussée extérieure (62) présentent au moins en partie la forme d'un hyperboloïde de révolution
et/ou
c) l'espace de combustion annulaire (46) présente une surface de section transversale (48) constante ou sensiblement constante.

10. Dispositif de chambre de poussée selon l'une quelconque des revendications précédentes, **caractérisé en ce que**
a) une surface de section transversale (48) de l'espace de combustion annulaire (46) change en fonction d'une distance (50) par rapport à une première extrémité (52) de l'espace de combustion annulaire (46) pour la réalisation d'au moins une zone de mélange de carburant (82) dans l'espace de combustion annulaire (46)
et/ou
b) le dispositif de chambre de poussée comprend un premier système d'injection pour l'injection de l'au moins un premier composant de carburant dans l'espace de poussée (28) dans une direction (70, 72) transversale, en particulier perpendiculaire, par rapport à la surface d'espace de poussée intérieure (60) et/ou à la surface d'espace de poussée extérieure (62),
dans lequel en particulier le premier système d'injection comprend un premier système de pompe (96) pour le pompage de l'au moins un premier composant de carburant à partir d'un premier réservoir de carburant (90) à travers la pluralité de premières entrées de carburant (68) dans l'espace de poussée (28).

11. Dispositif de chambre de poussée selon l'une quelconque des revendications précédentes, **caractérisé par** un deuxième système d'injection pour l'injection de l'au moins un deuxième composant de carburant dans la première section (32) dans une direction (74) parallèle ou sensiblement parallèle à des tangentes à la surface d'espace de poussée intérieure (60) et/ou la surface d'espace de poussée extérieure (62),
dans lequel en particulier le deuxième système d'injection comprend un deuxième système de pompe (104) pour le pompage de l'au moins un deuxième composant de carburant à partir d'un deuxième réservoir de carburant (92) à travers la pluralité de deuxièmes entrées de carburant (128) dans la première section (32).

12. Réacteur (84), en particulier pour un corps volant (88) ou un aéronef, comprenant un dispositif de chambre de poussée (86) selon l'une quelconque des revendications précédentes.

13. Corps volant (88) ou aéronef, comprenant un premier réservoir de carburant (90) pour au moins un premier composant de carburant, un deuxième réservoir de carburant (92) pour au moins un deuxième composant de carburant et un réacteur (84) selon la revendication 12.

14. Procédé pour faire fonctionner un dispositif de chambre de poussée (86) selon l'une quelconque des revendications 1 à 13, **caractérisé en ce qu'**une quantité du premier composant de carburant plus grande que cela est nécessaire pour le refroidissement de la paroi de buse intérieure (66) et/ou de la paroi de buse extérieure (56) est injectée dans l'espace de poussée (28) au moins à travers une partie de la pluralité de premières entrées de carburant (68).

15. Procédé selon la revendication 14, **caractérisé en ce que**
a) au moins une quantité du premier composant de carburant plus de deux fois plus grande que cela est nécessaire pour le refroidissement de la paroi de buse intérieure (66) et/ou de la paroi de buse extérieure (56) est injectée à travers la pluralité de premières entrées de carburant (68)
et/ou
b) l'ensemble du premier composant de carburant est injecté dans l'espace de poussée (28) à travers la pluralité de premières entrées de carburant (68).
